# EUROPÄISCHE PATENTSCHRIFT

(11) **EP 0 754 406 B1**
(45) Veröffentlichungstag und Bekanntmachung des Hinweises auf die Patenterteilung: **09.12.1998**
(21) Anmeldenummer: 96111003.8
(22) Anmeldetag: 09.07.1996
(51) Int. Cl.: A01K 11/00

(54) **Verfahren zur elektronisch auslesbaren Kennzeichnung eines landwirtschaftlichen Tieres**
Methode for electronic identification of a farm animal
Procédé pour l'identification électronique d'un animal agricol

(30) Priorität: 18.07.1995 DE 29511183 U
(43) Veröffentlichungstag der Anmeldung: 22.01.1997
(73) Patentinhaber: Diehl Ident GmbH, 90478 Nürnberg (DE)
(72) Erfinder: Gessner, Annette, 91242 Ottensoos (DE)
(74) Vertreter: Hofmann, Gerhard, Dipl.-Ing. Patentassessor

(56) Entgegenhaltungen:
- EP-A- 0 589 533
- WO-A-92/20221
- WO-A-93/05727
- DE-A- 4 315 366

## Beschreibung

Die Erfindung betrifft ein Verfahren zur elektronisch auslesbaren Kennzeichnung eines landwirtschaftlichen Tieres.

Dafür ist es bekannt, gemäß DE -A-43 15 366 einen das Ohr des Tieres durchdringenden schlanken, kurzen Schaft - seinem stirnseitig auftragenden Kopf gegenüber - am rückwärtigen Ende zu einem zylindrischen Sockel aufzuweiten; wobei der verbleibende Schaft so kurz bemessen ist, daß das Ohr bündig zwischen Kopf und Sockel des Schaftes eingefaßt wird. Ein vom Ohr distanzierter Bereich des Sockels ist zur formschlüssigen Aufnahme einer geometrisch angepaßten Scheibe mit integriertem Transponder ausgestaltet. Ein Züchter, der nicht diese Ohrmarke sondern eine Ohrmarke mit anders ausgestaltetem Schaftende einsetzen will, muß folglich eine andere, entsprechend angepaßte Transponderscheibe bereithalten, was aus kaufmännischen und logistischen Gründen einem landwirtschaftlichem Betrieb jedoch kaum zuzumuten ist. Auch kann eine Züchter, der sich schon Transponderscheiben unter Anpassung an eine bestimmte Schaftgeometrie zugelegt hat, damit nichts mehr anfangen, wenn er anders ausgestaltete Ohrmarken einsetzt - etwa vom Nachbarn besorgte Ohrmarken, weil sein eigener Vorrat gerade zur Neige gegangen ist.

Auch die aus der EP-B-0 177 201 bekannte Ohrmarke dient zur elektronisch auslesbaren Kennzeichnung von Tieren, insbesondere von landwirtschaftlichen Tieren. Für das Anlegen dieser Ohrmarke wird mittels eines zangenförmigen Werkzeugs der Schaft eines Einsteckteiles mit seinem vergrößertem Kopf durch ein Loch im Ohr des Tieres hindurchgeschoben und hinter dem Ohr in ein Aufsteckteil eingesprengt, so daß die Ohrmarke dann nach Art einer Druckknopf-Verbindung, aber irreversibel, fixiert ist. Für die elektronische Identifizierung sind in solche Ohrmarken Transponder integriert, die über ein Hochfrequenzfeld induktiv abfragbar sind, wie in der EP-A-0 582 137 für den Fall der Identifizierung und Konstatierung von Brieftauben mit Transponder-Fußringen näher beschrieben. Solche am Markt befindlichen Transponder-Ohrmarken sind allerdings größer und schwerer als die herkömmlichen mit Kennzeichnungen geprägten oder bedruckten dünnen Plastik-Ohrmarken, was die Gefahr steigert, daß die Tiere sich verletzen, weil sie sich damit im Gebüsch oder in den Stallungen verhaken.

Transponder-Flachspulen mit daran angeschlossenen Speicherschaltkreisen sind aus der EP-A-589 533 bekannt.

In der Praxis von Nachteil ist vor allem, daß in der Landwirtschaft sehr unterschiedliche Ohrmarken-Verschlüsse und dementsprechend unterschiedliche Handhabungswerkzeuge für das Anlegen konventioneller Ohrmarken im Einsatz sind, so daß ein Züchter wenig geneigt ist, für den Übergang von einer herkömmlichen auf eine elektronisch auslesbare Ohrmarke auch noch sein schon vorhandenes System zu wechseln.

In Erkenntnis dieser Gegebenheiten liegt der Erfindung die Aufgabe zugrunde, eine Transponder-Ohrmarke zu schaffen, die günstigere Eigenschaften hinsichtlich logistischer und handhabungstechnischer Kriterien aufweist, um im etablierten Zuchtbetrieb Akzeptanz für die elektronische Transponder-Identifizierung zu gewinnen.

Die vorliegende Erfindung löst diese Aufgabe mit dem im Patentanspruch 1 angegebenen Verfahren.

Da nach dieser Lösung der scheibenförmige Transponder einfach vor oder nach dem Einstecken des Schaftes in das Ohr des Tieres (jedenfalls vor dem Fixieren mittels des Aufsteckteiles) auf den Schaft eines beliebigen Ohrmarkentyps aufgeschoben wird, kann der Züchter seine eingeführten Ohrmarken und sein vorhandenes Werkzeug für deren Anlegen weiterbenutzen. Die vertraute Ohrmarke wird durch den Transponder weder größer noch spürbar schwerer, denn die Scheibe zur Aufnahme einer Flachspule und des Speicherschaltkreises für die auslesbare Identinformation muß nicht größer sein als die übliche Platte des Aufsteckteiles oder des Einsteckteiles einer Ohrmarke, so daß ein Standard-Transponder unabhängig von dem beim Züchter eingeführten Ohrmarken-Typ Anwendung finden kann. Die Außenkontur des scheibenförmigen Transponders kann aber auch einer vorgegebenen Ohrmarken-Geometrie angepaßt werden, weil die, eine zentrale Öffnung umgebende, Fläche in Hinblick auf die Durchmesser handelsüblicher Ohrmarken immer groß genug ist, um die Flachspule mit angeschlossenem Speicherschaltkreis aufzunehmen.

Zusätzliche Alternativen und Weiterbildungen sowie weitere Merkmale und Vorteile der Erfindung ergeben sich aus den weiteren Ansprüchen und, auch unter Berücksichtigung der zusammenfassenden Darlegungen in der abschließenden Kurzfassung, aus nachstehender Beschreibung eines in der Zeichnung unter Beschränkung auf das Wesentliche angenähert maßstabsgerecht skizzierten bevorzugten Realisierungsbeispiels zur erfindungsgemäße Lösung. In der Zeichnung zeigt:
- Fig. 1: im Axial-Längsschnitt das Aufsteckteil einer Ohrmarke,
- Fig. 2: das zugehörige Einsteckteil im Axial-Längsschnitt unter Berücksichtigung einer aufgesteckten Transponder-Scheibe und
- Fig. 3: die Transponder-Scheibe aus Fig.2 in der Draufsicht.

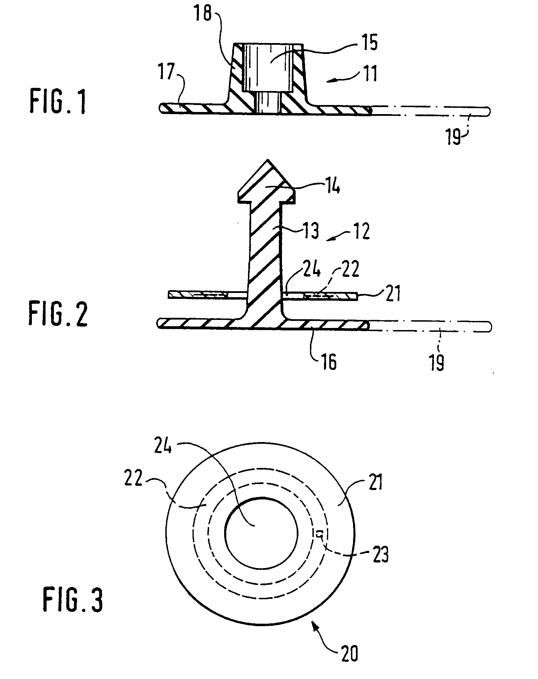

Die üblichen in der Viehzucht eingesetzten, aus gummielastischem Kunststoff gespritzten Ohrmarken bestehen aus einem Aufsteckteil 11 gemäß Fig. 1 und einem Einsteckteil 12 gemäß Fig. 2 mit nicht zerstörungsfrei wieder zu öffnendem Rastverschluß. Der Schaft 13 des Einsteckteiles wird dafür mit seinem radial vergrößerten und zur freien Stirnfläche hin konisch sich verjüngenden Kopf 14 in die, in Steckrichtung sich stufenförmig erweiternde, Rastöffnung 15 des Aufsteckteiles 11 hineingesprengt. Durch diese Männchen-Weibchen-Steckrastverbindung entsteht also eine Art von nicht wieder zu öffnendem Druckknopfverschluß. Der Schaft 13 des Einsteckteiles 12 ragt aus einer Anlageplatte 16 hervor, welcher in ihren Außenabmessungen eine Gegenplatte 17 des Aufsteckteiles 11, unter einem Hohlzylinder 18 zur Ausbildung der abgestuften Rastöffnung 15, entspricht. Jede dieser Platten 16, 17 ist häufig ― insbesondere bei Großtier-Ohrmarken ― mit einer fahnenförmigen exzentrischen Verlängerung 19 ausgestattet, die jede für sich oder gemeinsam zusammenwirkend Träger von visuellen oder elektronischen Markierungsmitteln sein kann. Bei den elektronischen Markierungsmitteln handelt es sich insbesondere um einen Transponder, der auf induktive Anregung in einem Hochfrequenz-Abfragefeld einen eingespeicherten Code auslesen läßt, welcher diese Ohrmarke und damit das Tier, welches irreversiebel mit dieser Ohrmarke ausgestattet ist, eindeutig identifiziert.

Im Falle vorliegender Erfindung allerdings ist der Transponder 20 in Form einer Kunststoff-Scheibe 21 ausgebildet, in die eine Flachspule 22 mit darin angeschlossenem Speicherschaltkreis 23, und erforderlichenfalls mit einer Miniatur-Gleichrichterschaltung zur vorübergehenden Versorgung des auszulesenden Speicherschaltkreises 23 im Abfragefeld, eingeschlossen ist. Diese z. B. ringförmige Scheibe 21 ist mit einer so großen zentralen Öffnung 24 versehen, daß sie ohne weiteres über den Kopf 14 aller gängigen Ohrmarken-Einsteckteile 12 hinweig auf den Schaft 13 geschoben werden kann. Die Scheibe 21 selbst muß also nicht ringförmig sein, sie kann auch eine ovale oder eine mehreckige Form haben. Die Flachspule 22 kann unabhängig von der Scheibengeometrie rund oder unrund gewickelt sein.

Das mit dem Transponder 20 in Form der Ringscheibe 21 bestückte Einsteckteil 12 wird mittels des vom Hersteller der Ohrmarke hierfür zur Verfügung gestellten Werkzeugs in das Ohr des zu kennzeichnenden Tieres eingestochen und darin dann mittels des rückwärtig angebrachten Aufsteckteiles 11 irreversibel befestigt. So kann unabhängig davon, mit welchen Ohrmarken der Züchter zu arbeiten gewohnt ist, unter Zwischenlage des standardisierten Transponders 20 in Form der Scheibe 21 das Tier beim Anlegen der Ohrmarke elektronisch gekennzeichnet werden, ohne daß es für die unterschiedlichen am Markt befindlichen Ohrmarken unterschiedlich aufgebauter Transponder bedarf oder die Ohrmarken durch die zusätzliche elektronische Identifizierfunktion unzumutbar größer und schwerer werden.

## Patentansprüche

1. Verfahren zur elektronisch auslesbaren Kennzeichnung eines landwirtschaftlichen Tieres durch Anlegen einer herkömmlichen Ohrmarke eines beliebigen beim Züchter eingeführten gängigen Ohrmarken-Typs mit einem irreversiblen Rastverschluß zwischen einem Aufsteckteil (11) und einem Schaft-Kopf (14) eines Ohrmarken-Schaftes (13) vor einer Anlageplatte (16) eines Einsteckteiles (12) der Ohrmarke, wobei vor oder nach Einstecken des Ohrmarken-Schaftes (13) in das Ohr des Tieres, aber vor Fixieren seines Aufsteckteiles (11), ein standardisierter Ringscheiben-Transponder (20) - in Form einer gelochten Kunststoff-Scheibe (21) zur Aufnahme eines an eine Flachspule (22) angeschlossenen Speicherschaltkreises (23) für eine Identinformation - mit einer zentralen Öffnung (24) auf den Ohrmarken-Schaft (13) geschoben wird, die so groß bemessen ist, daß sie ohne weiteres über den Kopf (14) des beliebigen gängigen Ohrmarken-Einsteckteiles (12) hinweggeschoben werden kann.

## Claims

1. Method for the electronically readable identification marking of a farm animal by attaching any type of traditional ear tag which is currently in established use with the breeder with an irreversible snap-in fastening between a slip-on portion (11) and the head (14) of an ear tag shaft (13) in front of a bearing plate (16) of a push-in portion (12) of the ear tag, whereby before or after inserting the ear tag shaft (13) into the animal's ear, but before fixing its slip-on portion (11), a standardized ring disk transponder (20) - in the form of a perforated plastic disk (21) for accommodating a storage circuit (23), connected to a flat coil (22), for an item of identification information - is pushed by means of a central aperture (24) onto the shaft (13) of the ear tag, this aperture being of such large dimension that it can easily be pushed over the head (14) of the push-in portion (12) of any ear tag currently in use.

## Revendications

1. Procédé d'identification par lecture électronique, d'un animal d'élevage par application d'une marque d'oreille classique de n'importe quel type courant de marque d'oreille, introduit chez les éleveurs, comportant une fermeture à encliquetage irréversible, entre une partie à rapporter (11) et une tête (14) d'une tige de marque d'oreille (13) située devant une plaque d'appui (16) d'une partie à embrocher (12) de la marque d'oreille, procédé dans lequel, avant ou après embrochage de la tige (13) de marque d'oreille dans l'oreille de l'animal, mais avant fixation de sa partie à rapporter (11), un disque annulaire transpondeur (20) standardisé - sous la forme d'un disque perforé en matière plastique (21), destiné à recevoir un circuit à mémoire (23) raccordé à une bobine plate (22) pour fournir une information d'identité - avec une ouverture centrale (24), est poussé sur la tige (13) de la marque d'oreille, laquelle ouverture a des dimensions suffisamment grandes pour pouvoir être poussée, sans problème, par-dessus la tête (14) de n'importe quelle partie à embrocher courante (12) de marque d'oreille.
